# EUROPEAN PATENT SPECIFICATION

(11) **EP 2 007 616 B1**
(45) Date of publication and mention of the grant of the patent: **07.08.2013**
(21) Application number: 07736780.3
(22) Date of filing: 17.04.2007
(51) Int. Cl.: B62D 55/06

(54) **COMPACT TRACKED VEHICLE FOR TRANSPORTING AND SELF-LOADING MATERIAL, THAT CAN BE OPERATED BY A STANDING OPERATOR**
KOMPAKTES KETTENFAHRZEUG ZUM TRANSPORTIEREN UND SELBSTLADEN VON MATERIAL, DAS VON EINEM STEHENDEN BEDIENER BETÄTIGT WERDEN KANN
VÉHICULE CHENILLÉ COMPACT AUTOCHARGEUR POUR TRANSPORTER DES MATÉRIAUX QUE PEUT FAIRE MARCHER UN OPÉRATEUR DEBOUT

(30) Priority: 19.04.2006 IT AN20060022
(43) Date of publication of application: 31.12.2008
(73) Proprietor: Messersi' S.p.A., 60010 Casine di Ostra (AN) (IT)
(72) Inventor: VALERE, Eugenio, I-60100 Ancona AN (IT)
(74) Representative: Provvisionato, Paolo
(86) International application number: PCT/IT2007/000276
(87) International publication number: WO 2007/119259

(56) References cited:
- EP-A- 0 971 078
- DE-A1- 3 439 815
- JP-A- 48 040 116
- JP-A- 59 128 058
- US-A- 3 790 230

## Description

### Technical Field

The present invention relates to a compact tracked vehicle for transporting and self-loading material, that can be operated by a standing operator.

### Background Art

In the prior art there are small, compact tracked transporting vehicles in which the vehicle driving position consists of a platform which, together with the engine unit and the vehicle control parts, is projecting relative to the surface of the vehicle which rests on the ground and in which the toothed wheels driving the tracks rest on the ground. Moreover, in such vehicles the geometric configuration of the track loops substantially has the shape of a trapezium having two bases and two sides, at least one of which is oblique. The trapezium is substantially centred relative to the loading body and the smaller of its two bases faces the ground. In this way, due to the presence of the oblique side(s) the track allows the possibility of easily climbing a sloping surface, an obstacle, a step, etc.

Such types of transporting vehicles are first and foremost of the single-purpose type, destined only for transporting material.

Moreover, due to the above-mentioned features, such transporting vehicles also have some important disadvantages.

A first disadvantage is limited stability against longitudinal tipping, which may result in the vehicle rearing up when the driver gets on the driving position platform if there is no load in the body, or a limited load, and/or if the vehicle is travelling on sloping terrain.

Another disadvantage is the fact that the driving wheel, being toothed necessitales a polygonal track configuration, which when the vehicles is travailing causes propulsion with a hopping motion that is particularly uncomfortable for the vehicle driver when he is on the platform. Such a condition, tolerable for intermittent and limited use of the vehicle, becomes particularly stressful and therefore unacceptable when the operator operates the vehicle continuously, that is to say, remains on the platform for a relatively long time.

There are also prior art vehicles designed to be driven exclusively by a driver located on the ground, who walks behind the vehicle. Said vehicles are fitted with tracked undercarriages substantially having a quadrilateral configuration with one of the vertices on the ground extending backwards relative to the protection of the body on the ground, and under the engine unit and the driving apparatus.

The toothed wheels, which drive the tracks, are positioned at the front section of the vehicle and are raised off the ground.

Such vehicles have the disadvantage of being destined only for transporting the material. Moreover, considering the impossibility of transporting the driver, the speeds at which the vehicle can travel are relatively low, resulting in the vehicle having quite low productivity. Another disadvantage of such vehicles is the fact that there are relatively long transmissions between the engine and the wheels driving the tracks, substantially located respectively at the rear and at the front of the vehicle.

Prior art already knows Document EP0971078 describing a compact tracked excavator which has a loading shovel on an articulated arm and carries a small skip on the front chassis. The track has a main section normally in contact with the ground and a raised rear section inclined at about 5 deg. When the shovel digs into the ground the reaction force lifts the front of the vehicle. Traction is maintained by the rear section of the track contacting the ground. The tracks are driven by large diameter rear wheels normal off the ground which, when the traction is maintained by the rear section of the track, contact the ground too. This EP document is taken as basis for the preamble of independent claim 1.

Document JP59128058 describes a crawler device provided with an arm oscillating between two different conditions. At the time of forward running a first condition is provided wherein the arm obliges the track to contrive a configuration able to stabilize running. At the time of rearward running a second condition of the arm obliges the track to take a configuration able to facilitate riding over an obstacle.

### Disclosure of the Invention

The main aim of the present invention is therefore to overcome the above-mentioned disadvantages by providing a compact, multi-purpose vehicle in which the operator is transported, with an erect posture, in maximum safety and comfort even with prolonged use of the vehicle, as well as conditions such that he can make full use, with maximum efficiency of the multi-purpose nature of the vehicle.

Another aim of the invention is to provide a multi-purpose vehicle with a rational technical design and economical construction.

Yet another aim is to provide a vehicle able to operate at a high speed even, and above all, for movements without a load, so as to minimise passive times in order to increase work productivity.

Another aim of the invention is to provide a vehicle able to operate even on terrain which is rather uneven, irregular and/or with obstacles emerging from the ground.

The technical features of the present invention, in accordance with the above aim, are clear from the content of the claims herein, in particular claim 1, and from any of the claims directly or indirectly dependent on claim 1.

### Brief Description of the Drawings

The advantages of the present invention are more apparent in the detailed description which follows, with reference to the accompanying drawings which illustrate preferred, non-limiting embodiments of the invention, in which:
Figure 1 is a side assembly view of a vehicle in accordance with the invention;
Figure 2 is a front view of the vehicle of Figure 1.

### Detailed description of the Preferred Embodiments of the Invention

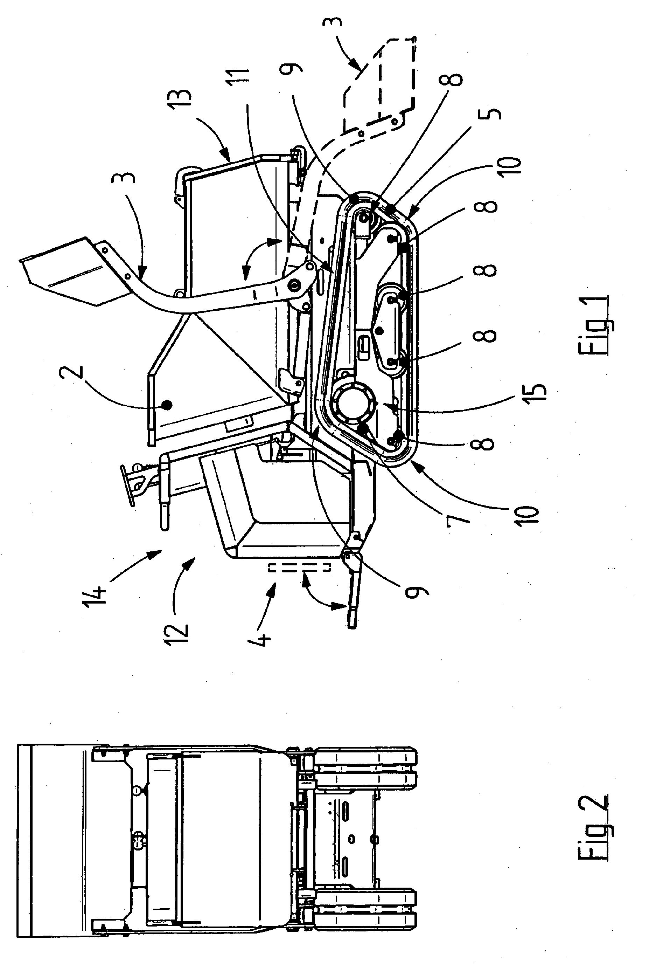

With reference to Figure 1, the numeral 1 denotes as a whole a tracked vehicle for transporting and self-loading material, intended in particular for loading/unloading and moving loose material or debris on building sites and/or road construction sites.

The vehicle 1 is tracked so that it can also operate on relatively hostile terrains and has a compact structure, its small dimensions allowing it to operate even in limited spaces.

The vehicle 1 basically comprises: a body 2 for holding the material; a power shovel 3, located at a front section 13 of the vehicle 1, for self-loading the body 2; and a platform 4, located at a rear section 14. The platform 4 is designed to support the operator while standing, with an erect posture behind the body 2, as well as behind a vehicle 1 drive and control unit, labelled 12 as a whole.

The tracks 5 are wound in a loop 6, the loop 6 substantially having a parallelogram configuration around a motor-driven wheel 7 and a plurality of tension rollers 8 which subtend the loop configuration 6, and in turn are supported by a relative supporting structure 15.

The parallelogram is angled in such a way that it has a pair of first vertices 9, raised off the ground and substantially translated forward relative to a pair of second vertices 10 adjacent to the ground. The motor-driven wheel 7 is associated with one of the first vertices 9 raised off the ground.

The vehicle 1 defined above has features making it a multi-purpose vehicle which can be used to great advantage due to the raised position of the operator on the platform 4. The platform 4 allows the operator not just to be comfortably transported by the vehicle 1 from one point to another of the working area, without him having to walk behind the vehicle 1, but also to benefit from a good view which allows him to easily monitor material shovelling and loading by the shovel 3. It should be noticed that the presence of the platform 4 allows the vehicle 1 to operate at relatively high speeds, certainly higher than those compatible with an operator walking behind the vehicle 1. This is particularly significant in terms of vehicle 1 operating efficiency.

However, it should also be noticed that the raised position of the driving wheel off the ground means that the operator - permanently supported by the platform 4 - is subject to reduced intensity mechanical vibrations from the vehicle 1, since it allows elimination of the characteristic hopping motion of some similar vehicles, driven by an operator walking behind the vehicle, which having the toothed driving wheel in contact with the ground, are subject to intense vibrations due to the polygonal shape imposed on the tracks by their meshing with the driving wheel.

In terms of vehicle 1 stability against rearing up - a problem which affects the prior art compact vehicles, above all when there is no load or a reduced load in the body - the vehicle 1 disclosed is quite safe and stable thanks to the simultaneous stabilising contribution of the front shovel 3 and the shape of the track 4. The latter, involving a backward translation of the second vertices 10 of the parallelogram which are on the ground, reduces the actual extent of platform 4 projection, thus helping to increase vehicle 1 intrinsic stability against longitudinal rearing up, a problem for which the operator positioned on the platform 4 is definitely a contributing factor. It should be noticed that such a feature is particularly advantageous in terms of safety for operator who, being permanently positioned on the vehicle 1, could have difficulty abandoning it in critical situations.

The motor-driven wheel 7 is associated with the corresponding track 5 preferably at a first vertex 9 of the parallelogram, nearest the platform 4 and, consequently furthest from the shovel 3. Such a layout has several particularly advantageous aspects.

Firstly it is advantageous for economical construction, since having the motor-driven wheels 7 close to the drive and control unit 12 means that the transmissions for the driving power can be shorter, with consequent advantages in terms of dimensions and simplified construction.

It should also be noticed that such a layout is also advantageous for making vehicle 1 movement faster, above all when it is empty. Under such conditions, the vehicle 1 may benefit from a more effective starting torque thanks to a better grip on the ground due to the greater weight unloaded onto the ground by the rear section 14 of the vehicle 1 to which the weight of the driver on the platform 4 also contributes.

Another advantage of positioning the driving wheels 7 away from the ground is suggested by the consequent considerable free height of the space between the tracks 5 and below the body 2 or the relative chassis. In a compact vehicle 1 with small dimensions such as the one described, intended to operate on irregular terrain on which there may be obstacles, this is particularly significant since, all other conditions being equal, it increases vehicle 1 performance capacities.

Figure 1 also shows how the configuration of the tracks 5 substantially having the shape of a parallelogram means that there is a side 11 of the track 5 raised off the ground, which is oblique and converges towards the front section of the vehicle. Such a convergence (consistent with the substantial parallelism definition adopted in this document) advantageously allows the length of the meshing arc between the track 5 and the motor-driven wheel 7 to be maximised. The benefits of this are reduced strain on the wheel 7 and the tracks 5, greater vehicle 1 mechanical reliability, and last but not least, less intense vibrations which can be triggered on the track which obviously tend to be less the higher the number of teeth on the wheel 7 simultaneously engage with the track 5.

On the other hand, it should be emphasised that this, even combined with the motor-driven wheel 7 position nearest to the platform 4, allows the diameter of the wheel 7 to be big, without this causing particular design problems. Oversizing the motor-driven wheel 7 makes it easy to achieve greater comfort for the driver in terms of vibrations, without having to pay for that advantage with a noticeable reduction in free space below the vehicle 1 chassis, which still remains advantageously high (see Figure 2). Figure 1 shows how the platform 4 has a structure constructed in such a way that it can fold flat against the drive unit 12 to allow the operator, if he wanted, to drive the vehicle 1 while walking behind the vehicle 1.

The invention described above is susceptible of industrial application and may be modified and adapted in several ways without thereby departing from the scope of the appended claims.

## Claims

1. A compact tracked vehicle (1) for transporting and self-loading material, that can be operated by a standing operator,
comprising in combination a body (2) for holding the material;
a power shovel (3), located at the front, for body (2) self-loading; a platform (4), located at the rear, for supporting the operator; and tracks (5), wound in a loop (6), around a motor-driven wheel (7) and a plurality of tension rollers (8), wherein the loop has a configuration provided with a pair of first vertices (9) raised off the ground and a pair of second vertices (10) adjacent to the ground; the motor-driven wheel (7) being associated with one of the first vertices (9) raised off the ground, which is the first vertex (9) of the parallelogram, nearest the platform (4) and furthest from the shovel (3); the vehicle (1) **characterising in that** said loop (6) has a substantially parallelogram configuration, wherein the pair of first vertices (9) raised off the ground is translated forward relative to the pair of second vertices (10) adjacent to the ground ; said loop (6) having one side (11) of the track (5) raised off the ground, which is oblique and converges towards the front section of the vehicle so as to maximise the meshing arc between the track (5) and the motor-driven wheel (7) .

2. The vehicle according to claim 1, **characterised in that** the platform (4) can be folded flat so that the operator can drive the vehicle while walking behind the vehicle.

## Patentansprüche

1. Ein Kompakt-Raupenfahrzeug (1) zum Transportieren und selbstständigem Laden von Material, das von einem stehenden Bediener bedient werden kann,
das in Kombination einen Körper (2) zum Halten des Materials umfasst; sowie eine Baggerschaufel (3), die sich auf der Vorderseite befindet, damit der Körper (2) selbstständig laden kann; eine Plattform (4), die sich auf der Hinterseite befindet, um den Bediener zu tragen; und Schienen (5), die in einer Schlaufe (6) um ein motorbetriebenes Rad (7) und eine Mehrzahl von Spannrollen (8) gewunden sind, wobei die Schlaufe eine Konfiguration hat, die sich aus einem Paar erster Scheitelpunkte (9), die sich vom Boden erheben, und einem Paar zweiter Scheitelpunkze (10), die in Bodennähe sind, ergibt; das motorbetriebene Rad (7) ist mit einem der ersten Scheitelpunkte (9), die sich vom Boden erheben, verbunden; es ist der erste Scheitelpunkt (9) des Parallelogramms, der am nächsten zur Plattform (4) und am weitesten von der Schaufel (3) entfernt ist; das Fahrzeug (1) ist **dadurch gekennzeichnet, dass** besagte Schlaufe (6) eine im Wesentlichen parallelogrammförmige Konfiguration hat, bei der das Paar der ersten Scheitelpunkte (9), das sich von Boden erhebt, in Bezug auf das Paar der zweiten Scheitelpunkte (10), das in der Nähe des Bodens ist, vorwärts bewegt wird; bei besagter Schlaufe (6) ist eine Seite (11) der Schiene (5) vom Boden angehoben, sie ist schräg und nähert sich an den vorderen Abschnizt des Fahrzeugs an, um den Ankopplungsbogen zwischen der Schiene (5) und dem motorbetriebenen Rad (7) zu maximieren.

2. Das Fahrzeug nach Patenanspruch 1, **gekennzeichnet dadurch, dass** die Plattform (4) flach zusammengefaltet werden kann, so dass der Bediener das Fahrzeug fahren kann, während er hinter dem Fahrzeug herläuft.

## Revendications

1. Un véhicule à chenilles compact (1) pour le transport et l'auto-chargement de matériaux, que peut faire fonctionner un opérateur debout,
comprenant en combinaison un corps (2) pour contenir le matériau ; une pelle mécanique (3), située à l'avant, pour l'auto-chargement du corps (2) ; une plateforme (4), située à l'arrière, pour supporter l'opérateur; et des chenilles (5), enroulées en boucle (6), autour d'une roue motorisée (7) et d'une pluralité de rouleaux de tension (8), où la boucle a une configuration définie par une paire de premiers sommets (9) élevés par rapport au sol et une paire de deuxièmes sommets (10) adjacents au sol ; la roue motorisée (7) étant associée à l'un des premiers sommets (9) élevés par rapport au sol, qui est le premier sommet (9) du parallélogramme, le plus proche de la plateforme (4) et le plus éloigné de la pelle (3) ; le véhicule (1) étant **caractérisé en ce que** ladite boucle (6) a essentiellement la configuration d'un parallélogramme, où la paire de premiers sommets (9) élevés par rapport au sol est décalée en avant par rapport à la paire de deuxièmes sommets (10) adjacents au sol ; ladite boucle (6) ayant un côté (11) de la chenille (5) élevé par rapport au sol, qui est oblique et converge vers la section avant du véhicule de manière à optimiser l'arc de prise entre la chenille (5) et la roue motorisée (7).

2. Le véhicule selon la revendication 1, **caractérisé en ce que** la plateforme (4) peut être repliée à plat de manière à ce que l'opérateur puisse conduire le véhicule tout en marchant derrière ledit véhicule.
